# EUROPÄISCHE PATENTANMELDUNG

(11) **EP 1 188 604 A2**
(43) Veröffentlichungstag der Anmeldung: **20.03.2002**
(21) Anmeldenummer: 01119212.7
(22) Anmeldetag: 09.08.2001
(51) Int. Cl.: B60N 2/16

(54) **Einrichtung zur Höhenverstellung eines Sitzes mittels eines Antriebsmotors**

(30) Priorität: 29.08.2000 DE 10042248
(71) Anmelder: ROBERT BOSCH GMBH, 70442 Stuttgart (DE)
(72) Erfinder: Dankowski, Konrad, 67760 Gambsheim (FR); Steimel, Uwe, 77830 Buehlertal (DE)

(57) **Zusammenfassung**

Die Erfindung bezieht sich auf eine Einrichtung zur Höhenverstellung eines Fahrzeugsitzes mittels eines Antriebsmotors (1) der Getriebe (2, 3) mit unterschiedlichen Hubwegen synchron antreibt. Eines der Getriebe (2, 3) wird bei Betätigung des Antriebsmotors (1) früher in Anschlag gefahren als das verbleibende Getriebe (4). Das Gehäuse (14) eines der Getriebe (2, 3) ist mit Anschlagflächen (24) versehen. Bei Erreichen einer Maximalposition des Fahrzeugsitzes liegt ein Gehäuseelement (21) mit einer Anschlagfläche (32) an einem Antriebselement (15) derart an, daß ein das Antriebsmoment des Antriebsmotors (1) übersteigendes Bremsmoment (31) erzeugt wird.

## Beschreibung

### Technisches Gebiet

Sitze von Fahrzeugen wie beispielsweise Sitze für Pkw-Insassen sind heute oft mit elektrischen Antriebsmotoren ausgestattet. Aus Kostengründen und aus Rücksicht auf die bordeigene Stromversorgung wird versucht, pro Insassensitz lediglich einen Antriebsmotor vorzusehen, der auf zwei Getriebe einwirkt. Um Verkippungen des Sitzes bei dessen Auf-bzw. Abwärtsbewegungen vorzubeugen, ist es wichtig, die beiden Getriebe synchron anzutreiben, um eine von den Sitzinsassen als gleichmäßig empfundene Verstellbewegung des Sitzes zu erzeugen.

### Stand der Technik

Bei synchron zwei Sitzverstellgetriebe antreibenden Elektromotoren entsteht durch Kraftübertragungselemente wie Kupplungen und Getriebekomponenten im Antriebsstrang von den jeweiligen Abtriebswellen des Elektromotors zu dem die vertikale Stellbewegung ausführenden Komponenten zwangsläufig Spiel. Spiel stellt sich ebenfalls an den Anlenkpunkten, d. h. den Verbindungsstellen der Antriebskomponenten untereinander ein. Das sich einstellende Spiel führt zwangsläufig zu unterschiedlichen Hubwegen in den Antrieben der Vertikalverstellung des Sitzes. Werden weiterhin unterschiedliche Getriebe eingesetzt, was aus Bauraumgründen und Kostengründen der Fall sein kann, so können die Fertigungstoleranzen der eingesetzten Getriebe ebenfalls zu unterschiedlichen Hubwegen an den Getrieben führen, was eine Verkippung der Sitzfläche bei der Vertikalbewegung des Sitzes nach sich zieht.

Bei der Montage eines Fahrzeugsitzes, beispielsweise für ein Kraftfahrzeug, werden die die Vertikalbewegung der Sitzfläche erzeugenden Getriebe im ausgefahrenen Zustand eingebaut. Danach erfolgt eine Verstellung des Fahrzeugsitzes nach unten, bis das Getriebe mit dem kleineren Hubweg in seine Anschlagposition fährt. Anschließend wird das Verstellgetriebe für die Vertikalbewegung des Fahrzeugsitzes auf der diesem gegenüberliegenden Seite per Hand vom Antriebsmotor abgekoppelt und manuell in seine Anschlagposition gedreht. Diese Vorgehensweise ist recht aufwendig, sowohl was den Montagezyklus als auch den zu betreibenden Aufwand betrifft. Ferner stellt sie eine nicht zu unterschätzende Fehlerquelle bei der Einstellung der Fahrzeugsitzantriebe dar. Unterbleibt die Einstellung hingegen, kann sich der Antriebsmotor um das vorhandene Spiel und die Elastizität im Antriebsstrom weiter drehen und das noch nicht in seiner Anschlagsposition gefahrene Getriebe weiterhin antreiben. Diese weitere Antriebsbewegung zieht ein seitliches Verkippen des Sitzes nach sich, das nicht akzeptiert werden kann.

Der weitere Antrieb des noch nicht in seine Anschlagpositon gefahrenen weiteren, noch "frei" bewegbaren Getriebes, ist die Ursache für ein unerwünschtes Verkippen der Sitzfläche.

### Darstellung der Erfindung

Mit der erfindungsgemäß vorgeschlagenen Lösung kann durch eine Antriebssperre des Antriebsmotors bei Erreichen der ersten Anschlagsposition ein weiteres Nachlaufen des Antriebsmotors zur Verhinderung des weiteren Verfahrens des noch nicht in seinen Anschlag gefahrenen weiteren Getriebes, durch Aufbringen eines das Antriebsmomentes des Antriebsmotors übersteigenden Bremsmomentes verhindert werden. So lassen sich trotz unterschiedlicher Hubwege und unterschiedlich sich einstellenden Spieles bzw. unterschiedlicher Fertigungstoleranzen der verwendeten Getriebe durchaus Getriebe mit unterschiedlichen Hubwegen weiterhin einsetzen. Die erfindungsgemäß vorgeschlagene Lösung der Antriebssperre des die Vertikalstellantriebe antreibenden Antriebsmotors, kann in vorteilhafter Weise ohne den Einbau zusätzlicher Teile realisiert werden, was insgesamt zu einer Senkung der Herstell- und der Montagekosten beiträgt, da der Einrichtevorgang, d. h. das manuelle Entkoppeln des Getriebes mit dem längeren Hubweg bei der Montage des Sitzes nunmehr vollständig entfallen kann.

Durch den Fortfall der manuell vorzunehmenden Einstellung am Getriebe mit dem längeren Hubweg an der Vertikalverstellung des Fahrzeugsitzes ist auch die Fehlerquelle ausgeschlossen, die eine manuell vorzunehmende Einstellung zwangsläufig darstellt. Die Montage der erfindungsgemäß vorgeschlagenen Sitzhöhenhubverstellung kann nun rationeller erfolgen, es lassen sich kürzere Montagezeiten realisieren, wodurch eine Automatisierung der Montage möglich wird.

In vorteilhafter Weise wird das Bremsmoment gerade dann erzeugt, wenn durch das Erreichen der Maximalposition des Getriebes mit dem kürzeren Hubweg zwei Flächen aneinander in einem Kontaktbereich anliegen. Der Kontaktbereich, an dem die eine Stirnfläche mit einer an diese durch Verformung anstellbare weitere Stirnfläche das Bremsmoment erzeugt, liegt bezogen auf die die Vertikalverstellbewegung erzeugende Gewindespindel in einem Radius zur Symmetrielinie eben jener Gewindespindel. Wird der Abstand, zwischen der Kontaktfläche, an der das Bremsmoment erzeugt wird, und der Symmetrielinie der angetriebenen Gewindespindel ausreichend groß gewählt, so läßt sich die Größe des Bremsmomentes beeinflussen und insbesondere so einstellen, daß die Größe des Antriebsmomentes des Antriebsmotors übersteigt, mit welchem dieser das noch nicht in seiner Abschlagposition gefahrene Getriebe mit längerem Hubweg verstellt. Das Bremsmoment läßt sich außer durch geeignete Dimensionierung des Radius', bezogen auf die Symmetrieachse der Gewindespindel, auch durch die Oberflächenbeschaffenheit der einander kontaktierenden Anschlagflächen beeinflussen. Diese können zur Erhöhung eines höheren Reibwertes mit Beschichtungen, die einen höheren Reibkoeffizienten aufweisen, versehen werden. Fertigungstechnisch besonders einfach lassen sich die Anschlagflächen auch mit einer erhöhten Rauigkeit ausführen. Zum Erhalten der Rauigkeit über die Lebensdauer der automatischen Sitzhubverstellung, können die in erhöhter Rauigkeit ausgeführten Anschlagflächen auch gehärtet werden, so daß sichergestellt ist, daß das Bremsmoment stets bei Kontakt der Anschlagfläche mit der verformbaren Anschlagfläche eines Gehäuseelementes erzeugt wird. Bei Einsatz angerauter Oberflächen, die fertigungstechnisch besonders einfach herstellbar sind und eine Senkung der Fertigungskosten gestatten, kann die Höhe der Anstellkraft der fixen Anschlagfläche und der verformbaren Anschlagfläche vermindert werden, so daß die Materialbeanspruchung abnimmt.

In besonders vorteilhafter Weise ist bei Einsatz der erfindungsgemäß vorgeschlagenen Lösung kein zusätzliches Bauteil innerhalb eines Verstellantriebes eines Fahrzeugsitzes erforderlich. Durch die Ausbildung eines bereits im Getriebegehäuse des Getriebes mit kürzerem Hubweg vorhandenen Gehäuseelementes, wie beispielsweise des Gehäusedeckels als verformbares Bauteil, läßt sich eine für den Kontakt mit einer fixen Anschlagsfläche gerade ausreichende Verformung um einen Spannweg s bei Erreichen der Maximalposition der Gewindespindel des Winkelgetriebes mit kürzerem Hubweg erreichen. Somit sind keine zusätzlichen Montagearbeitsgänge erforderlich, die Montage wird im Gegenteil rationeller gestaltet und ist insbesondere einer Automatisierung zugänglich.

### Zeichnung

Anhand der Zeichnung wird die Erfindung nachstehend detaillierter erläutert.

### Es zeigt:

- Figur 1: einen zwei Winkelgetriebe mit unterschiedlichen Hubwegen synchron antreibenden Antriebsmotor, der mittig zwischen den beiden Getrieben aufgenommen ist,
- Figur 2: eine Schnittdarstellung durch das Getriebe mit dem kürzeren Hubweg samt Lagerung in einem Lagerflansch und
- Figur 3: eine vergrößerte Darstellung des das Bremsmoment erzeugenden Kontaktbereiches am Winkelgetriebe mit dem kürzeren Hubweg.

### Ausführungsvarianten

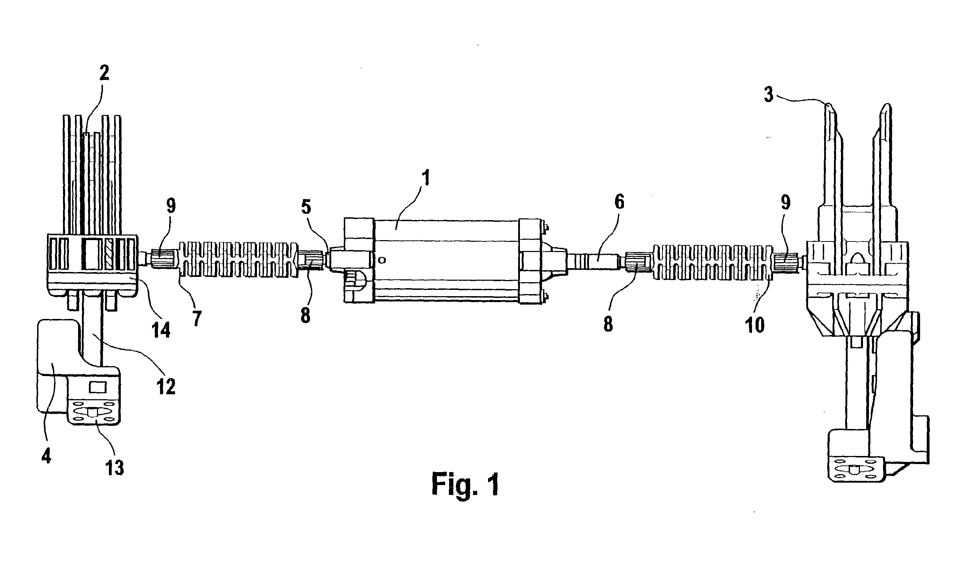

Der Darstellung gemäß Fig. 1 sind zwei Winkelgetriebe mit unterschiedlichen Hubwegen zu entnehmen, die von einem sie synchron antreibenden Antriebsmotor angetrieben werden.

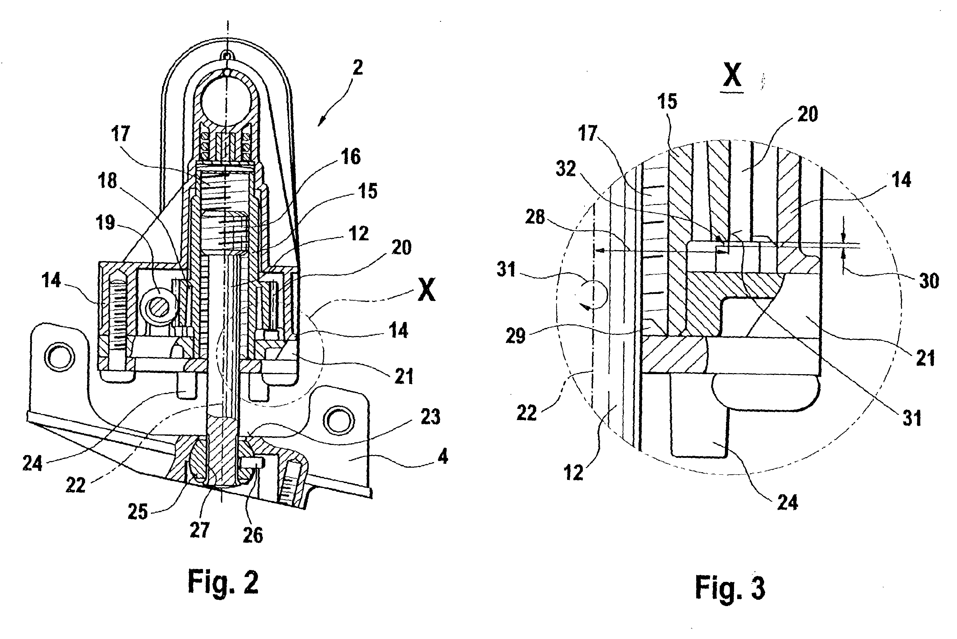

Der als Elektromotor ausgebildete Antriebsmotor 1 ist gemäß der Darstellung aus Fig. 1 mittig zwischen zwei die Vertikalbewegung eines Fahrzeugsitzes erzeugenden Getrieben 2, 3 aufgenommen. Das die Vertikalverstellung bewirkende Winkelgetriebe 2 ist dasjenige Getriebe mit dem kürzeren Weg seiner Gewindespindel 12, während mit Bezugszeichen 3 das Winkelgetriebe bezeichnet ist, dessen Hubweg den Hubweg des erwähnten Winkelgetriebes 2 übersteigt. Zum synchronen Antrieb der beiden Winkelgetriebe 2 bzw. 3 ist der Antriebsmotor 1 mit zwei Abtriebswellen 5 bzw. 6 ausgestattet. An der Abtriebswelle 5 ist mittels einer Abtriebseinleitung 8 ein Kupplungselement 7 angeschlossen, welches mittels eines Mehrkeilprofiles 9 das Winkelgetriebe mit dem kürzeren Hubweg antreibt. Durch den Antrieb wird die aus dem Getriebegehäuse 14 nach unten hinausragende Gewindespindel 12 in Rotation versetzt, die ihrerseits an einem Lagerflansch 4 befestigt ist, in welchem eine Lochplatte 13 aufgenommen ist (vgl. Darstellung gemäß Fig. 2).

Der als Elektromotor ausgebildete Antriebsmotor 1 verfügt andererseits über eine lange Abtriebswelle 6, die über eine Abtriebseinleitung 11 mit Längenausgleich, beispielsweise ein Mehrkeilprofil oder eine ähnliche Ausführungsart auf ein Kupplungselement 10 einwirkt. Das Kupplungselement 10 ist getriebeseitig über ein Mehrkeilprofil 9 mit dem Winkelgetriebe 3 mit höherem Hubweg verbunden. Über das Kupplungselement 10 und die Antriebswelle 6 wird über die Kraftübertragungsanschlüsse 11 bzw. 9 die Gewindespindel des Winkelgetriebes 3 in Rotation versetzt. Diese ist analog zur Darstellung am gegenüberliegenden Winkelgetriebe 2 an einem Lagerflansch angelenkt. Anstelle der erwähnten Mehrkeilprofile 9, 8 oder 11 lassen sich auch andere, eine Längenausdehnung oder eine Längenkompensation realisierende Kupplungselemente, wie beispielsweise eine Anzahl von Paßfedern an den Krafteinleitungsstellen vorsehen.

Aus der Darstellung gemäß Fig. 2 geht eine Schnittdarstellung durch das Winkelgetriebe mit dem kürzeren Hubweg Gesamtlagerung in einem Lagerflansch hervor.

Das Winkelgetriebe 2 gemäß der Darstellung in Fig. 2 ist im Längsschnitt dargestellt. Im Getriebegehäuse 14 des Winkelgetriebes 2 mit kürzerem Hubweg ist die bereits in Zusammenhang mit Fig. 1 erwähnte Gewindespindel 12 aufgenommen. Die Gewindespindel 12 ist rotationssymmetrisch zu ihrer Symmetrieachse 22 ausgebildet und umfaßt einen verbreiterten Gewindekopfbereich, der ein Außengewinde trägt, welches mit einem Innengewinde 17 einer Gewindehülse 15 zusammenarbeitet. Die Gewindehülse 15, in deren Durchgangsbohrung das Innengewinde 17 ausgebildet ist, wird in ihrem Sockelbereich 18 angetrieben. Dazu ist im Sockelbereich 18 der Gewindehülse 14 eine Außenverzahnung 20 vorgesehen. Die Außenverzahnung 20 der Gewindehülse 14 im Sockelbereich 18 kämmt mit einem Schneckenantrieb 19, der seinerseits über das Abtriebsmoment des Antriebsmotors 1 und über das Kupplungselement 7 bzw. die Mehrkeilprofilverbindung 9 angetrieben ist.

Über den selbst kommenden Schneckenantrieb 19 und die Außenverzahnung 20 ist sichergestellt, daß bei Vorgabe einer vertikalen Stellposition der Sitzfläche, d. h. einer vorgegebenen Stellposition des Lagerflansches 4 der Sitz in dieser eingestellten Lage verbleibt und sich nicht ungewollt aus dieser hinausbewegt.

Am unteren Bereich des Getriebegehäuses 14 befindet sich ein Getriebedeckel 21, der um einen Spannweg s (vgl. Darstellung in Fig. 3) in begrenztem Maße verformbar ist. Dazu sind am Getriebedeckel 21 an der Unterseite, jeweils symmetrisch zur Getriebespindel 12 Anschläge 24 ausgebildet. Fährt die Gewindespindel 12 in ihre Maximalposition, so liegt der Lagerflansch 4 mit seiner Anschlagfläche 23 an der Unterseite der am Getriebegehäusedeckel 21 ausgebildeten Anschläge 24 an.

Im unteren Bereich der Getriebespindel 12 ist ein Kugelkörper 25 aufgenommen. Mittels eines Spannelementes 26, beispielsweise eine Imbusschraube oder dergleichen ist der an der Unterseite der Getriebespindel 12 gelagerte Kugelkörper 25 in einer Längsnut 27 der Getriebespindel 12 fixiert. Dadurch ist der Lagerflansch 4 fest mit der Getriebespindel verbunden, die ihrerseits nicht rotierend ausgebildet ist, da die Gewindehülse 14 über den Schneckenantrieb angetrieben ist und sich ihrerseits im Getriebegehäuse 12 des Winkelgetriebes 2 rotierend bewegt.

Fig. 3 zeigt eine vergrößerte Darstellung des das Bremsmoment erzeugenden Anschlage-bzw. Kontaktbereiches am Getriebe mit kürzerem Hubweg in erheblich vergrößertem Maßstab. Wie der Darstellung gemäß Fig. 3 entnommen werden kann, ist an der Unterseite des Getriebegehäuseelementes 21, d. h. des Getriebegehäusedeckels 21 Anschläge 24 ausgebildet. Der auf der gegenüberliegenden Seite der Symmetrielinie 22 der Gewindespindel 12 liegende Anschlag 24 ist aus Übersichtlichkeitsgründen nicht dargestellt. Beim Hochfahren der Anschlagfläche 23 des Lagerflansches 24, derart, daß die Fläche 23 die Anschläge 24 am Getriebegehäusedeckel 21 berührt, wird der Getriebegehäusedeckel 21 um einen Spannwinkel s (Bezugszeichen 30) verformt. Dadurch legt sich die am Getriebegehäusedeckel ausgeführte Kontaktfläche 32 an die dieser gegenüberliegende Stirnfläche der Gewindehülse 15 an. Diese Kontaktstelle liegt vorzugsweise im Radius 28 bezogen auf die Symmetrieachse 22 der Gewindespindel 12. Dadurch läßt sich eine Antriebssperre erzeugen, da das Bremsmoment 31, welches auf die Gewindespindel 12 einwirkt, größer ist als das Abtriebsmoment des Antriebsmotors 1, welches das gegenüberliegende, noch frei verfahrbare Winkelgetriebe 3 mit längerem Hubweg antreibt. Das Bremsmoment 31 wird demnach gebildet durch den Radius 28 zwischen der Symmetrielinie 22 und dem Kontaktbereich der Flächen 32 am Getriebegehäusedeckel 21 und der gegenüberliegenden Stirnfläche der Gewindehülse 15.

Eine Verringerung der mechanischen Belastung der Bauteile 15 bzw. 21 bei deren Verspannung um den Spannweg 30 kann dadurch erzielt werden, daß die Vorspannkräfte vermindert werden können, indem die Gewindehülse 15 im Bereich ihrer Anschlagfläche, sowie der Ventildeckel 21 an seiner Anschlagfläche 32 mit einer Oberfläche mit höherem Reibungskoeffizienten µ ausgebildet sind. Dadurch läßt sich mit einer geringeren Vorspannkraft eine ausreichend hohe Reibkraft erzielen, so daß die Erzeugung des Bremsmomentes 31 sichergestellt ist und gleichzeitig die Dauerbelastung während der Verspannung des Ventildeckels 21 gegen die Stirnfläche an der Gewindehülse 15 erheblich herabgesetzt ist.

In der Darstellung gemäß Fig. 3 ist zudem die Lage der Außenverzahnung 20 an der Gewindehülse 15 wiedergegeben, die ihrerseits das Innengewinde 17 enthält, mit welchem das Außengewinde am Gewindekopf 16 der Gewindespindel 12 zusammenarbeitet. Das Antriebsmoment der Antriebsschnecke 19 wird im Bereich der Außenverzahnung eingeleitet, so daß bereits durch die Wahl eines kleineren Radius' 28, der kleiner als der in Fig. 3 dargestellte Radius 28 sein kann, ein das Abtriebsmoment des Antriebsmotors 1 übersteigendes Bremsmoment 31 erzeugt werden kann.

In fertigungstechnischer Hinsicht besonders leicht verstellbar, lassen sich die miteinander zusammenarbeitenden Flächen 32 des Gehäusedeckels 21 und die Stirnfläche 15 an der Gewindehülse 15 neben einer Bearbeitung mit höherer Rauheit auch mit die Reibung erhöhenden Beschichtungen versehen, so daß auch ein auf diesem Wege eine ausreichend hohe Reibkraft erzeugt werden kann.

Das durch den Kontakt der Stirnfläche der Gewindehülse 15, mit dem um den Spannwinkel s (Bezugszeichen 30) verformten Getriebegehäusedeckel 21 erzeugte Bremsmoment 31 fungiert als Antriebssperre des Antriebsmotors 1, der wenn nicht über das Bremsmoment 31 gesperrt, das gegenüberliegende Winkelgetriebe 3 mit höherem Hubweg weiter antreiben könnte, was zu einer Verkippung des Fahrzeugsitzes führen könnte. Durch das bei Erreichen der Maximalposition des Getriebes mit kürzerem Hubweg 2 erzeugte Bremsmoment wird der Antriebsmotor 1 jedoch gemäß der vorgeschlagenen Lösung sofort stillgesetzt, ohne daß es des Einbaues weiterer Komponenten und Bauteile in eine automatische Sitzhöhenverstellung eines Fahrzeugsitzes bedürfte. Demnach lassen sich dann serienmäßig gefertigte und mit unterschiedlichen Fertigungstoleranzen und Hubwegen einhergehende Winkelgetriebe 2 bzw. 3 durchaus einsetzen. Die Lage der Maximalposition des Getriebes 2 mit kürzerem Hubweg bestimmt das Ende der Antriebsbewegung des noch "freien" noch nicht in seine Anschlagposition gefahrenen Winkelgetriebes 3 an der Höhenverstellung des Fahrzeugsitzes.

### Bezugszeichenliste

- 1: Antriebsmotor
- 2: kurzhubiges Getriebe
- 3: längerhubiges Getriebe
- 4: Lagerflansch
- 5: Abtriebswelle
- 6: lange Abtriebswelle
- 7: Kupplung kurzhubiges Getriebe
- 8: Antriebseinleitung
- 9: Mehrkeilprofil
- 10: Kupplung längerhubiges Getriebe
- 11: Antriebseinleitung mit Längenausgleich
- 12: Gewindespindel
- 13: Lochplatte
- 14: Getriebegehäuse
- 15: Gewindehülse
- 16: Gewindekopf
- 17: Innengewinde
- 18: Hülsensockel
- 19: Schneckenantrieb
- 20: Außenverzahnung
- 21: Getriebedeckel
- 22: Symmetrieachse
- 23: Anschlagfläche
- 24: Anschläge
- 25: Kugelkörper
- 26: Spannelement
- 27: Längsnut
- 28: Radius
- 29: Fase
- 30: Spannweg s
- 31: Bremsmoment
- 32: Anlagefläche am Getriebedeckel 21

## Patentansprüche

1. Einrichtung zur Höhenverstellung eines Fahrzeugsitzes mittels eines Antriebsmotors (1), der Getriebe (3, 4) mit unterschiedlichen Hublängen synchron antreibt, von den ein Getriebe (3) früher in seinen Anschlag gefahren wird als das verbleibende Getriebe (4) und das Gehäuse (14) eines der Getriebe (3, 4) mit Anschlagflächen (24) versehen ist, **dadurch gekennzeichnet, daß** bei Erreichen einer Maximalposition des Fahrzeugsitzes ein Getriebegehäuseelement (21, 32) an einer Anschlagfläche (15) derart anliegt, daß ein das Antriebsmoment des Antriebsmotors (1) übersteigendes Bremsmoment (31) erzeugt wird.

2. Einrichtung gemäß Anspruch 1, **dadurch gekennzeichnet, daß** die Anschlagfläche (32) stirnseitig einer eine Gewindespindel (12) aufnehmenden Gewindehülse (15) gegenüberliegt.

3. Einrichtung gemäß Anspruch 2, **dadurch gekennzeichnet, daß** die Gewindehülse (12) in ihrem Sockelbereich (18) mit einer Krafteinleitungsstelle versehen ist.

4. Einrichtung gemäß Anspruch 3, **dadurch gekennzeichnet, daß** die Krafteinleitungsstelle (20) als Außenverzahnung beschaffen ist, die mit einem Schneckenantrieb (19) zusammenwirkt.

5. Einrichtung gemäß Anspruch 1, **dadurch gekennzeichnet, daß** die Anlage des Gehäuseelementes (21) an der Anlagefläche (32) durch Verformung des Gehäuseelementes (21) um einen Spannweg s (30) erfolgt.

6. Einrichtung gemäß Anspruch 1, **dadurch gekennzeichnet, daß** die Kontaktstelle zwischen der Anschlagfläche (32) und dem Gehäuseelement (21) im Radius (28) bezogen auf die Symmetrieachse (22) der Gewindespindel (12) liegt.

7. Verfahren zur Sperre eines Antriebsmotors (1), mit welchem synchron zwei Getriebe (2, 3) angetrieben werden, die unterschiedliche Hubwege erzeugen und an dem Gehäuse (14) eines der Getriebe (2, 3) Maximalpositionen definierende Anschläge (24) ausgebildet sind, **dadurch gekennzeichnet, daß** durch den Kontakt eines verformbaren Gehäuseelementes (21, 32) mit einer Anschlagfläche (15) ein das Antriebsmoment der Gewindespindel (12) übersteigendes Bremsmoment (31) erzeugt wird.

8. Verfahren gemäß Anspruch 7, **dadurch gekennzeichnet, daß** die Verformung des Gehäuseelementes (21) durch Anstellung einer Anschlagfläche (23) des Lagerflansches (4) an die Anschläge (24) an einem Getriebegehäuse (14) hervorgerufen wird.

9. Verfahren gemäß Anspruch 7, **dadurch gekennzeichnet, daß** der Kontaktbereich zwischen den das Bremsmoment (31) erzeugenden Flächen (15, 32) im Radius r (28) bezogen auf die Symmetrieachse (22) liegt, der so bemessen ist, daß das Bremsmoment (31) das Antriebsmoment übersteigt.

10. Verfahren gemäß Anspruch 7, **dadurch gekennzeichnet, daß** im Kontaktbereich zwischen den das Bremsmoment (31) erzeugenden Flächen (15, 32) diese mit reibungserhöhenden Beschichtungen versehen sind.
